# EUROPEAN PATENT APPLICATION

(11) **EP 4 822 290 A1**
(43) Date of publication of application: **14.10.2026**
(21) Application number: 26169587.8
(22) Date of filing: 31.03.2026
(51) Int. Cl.: G01B 11/06, G01B 1/00, G01B 11/02, G01B 11/03, G01B 7/06, G01B 15/02, G01N 21/84, G01N 21/89

(54) **CAMERA-BASED SHEET MONITORING SYSTEM**

(30) Priority: 07.04.2025 US 202519171783
(71) Applicant: Honeywell International Inc., Charlotte, NC 28202 (US)
(72) Inventor: FORBES, Michael, Charlotte, 28202 (US); FOLNSBEE, Eric John, Charlotte, 28202 (US)
(74) Representative: Haseltine Lake Kempner LLP

(57) **Abstract**

The sheet system and method measures a physical property of material deposited in patterns on a sheet. A scanning sensor measures a physical property of the deposited material when traveling in a machine direction (MD). In one aspect, the speed of the moving sheet in the MD is measured against time to generate time-stamp signals. Visual images of the patterns are correlated with the time-stamp signals and the physical property measurements to generate an MD position profile which aligns the physical property measurements to the patterns on the sheet. In another aspect, the visual images of the plurality of patterns from the sheet are converted into measurement data representing positional parameters of the patterns on the sheet. The measurement data is used to adjust the speed of the sheet and the speed of the scanning sensor to modify the scanning path of the scanning sensor.

## Description

### TECHNICAL FIELD

This disclosure is generally directed to quality control techniques for fabricating sheet materials and, more particularly, to a camera-based system of precisely matching measurements made during the production of uncoated or coated sheet products such as electrochemical cell electrodes to permit identification of the edges of patches forming the electrochemical cell electrodes during their manufacture.

### BACKGROUND

On-line measurements are used to detect properties of sheet materials during manufacture to enable prompt control of the sheet making processes and, thus, to assure sheet quality while reducing the quantity of substandard sheet material which is produced. One of the main complications in making on-line measurements during sheet making is that the physical properties of sheet materials usually vary in the machine direction (MD) as well as in the cross direction. MD refers to the direction of travel of the sheet material during manufacture, and the term cross direction (CD) refers to the direction across the surface of a sheet perpendicular to the MD.

To detect variations in sheet materials, scanning sensors are employed that periodically traverse back and forth across a sheet making machine in the cross direction while detecting values of a selected sheet property such as basis weight or caliper along each scan. Normally, the sheet being produced is traversed from edge to edge during each scan. The time required for a typical scan is generally between a few seconds to tens of seconds depending on the cross-direction length, which can be many meters. The rate at which measurement readings are provided by such scanners is usually adjustable; a typical rate is about one measurement reading every millisecond.

In practice, measurement information provided by scanning sensors is usually assembled after each scan to provide a "profile" of the detected sheet property in the cross direction. In other words, each profile is comprised of a succession of sheet measurements at adjacent locations in the cross direction. The purpose of the profiles is to allow cross-directional variations in sheet properties to be detected easily. Based upon the detected cross-directional variations in the detected sheet property, appropriate control adjustments may be made to the sheet making machine with the goal of reducing profile variations both in the cross direction and in the machine direction.

A scanning sensor that periodically traverses a sheet at generally constant speed cannot measure the selected sheet property at locations which are aligned exactly perpendicular to the longitudinal edges of the sheet. Due to finite sheet velocity, scanning sensors actually travel diagonally across the sheet surface, with the result that consecutive scanning paths have a zigzag pattern with respect to the direction perpendicular to the longitudinal edges of the sheet. In practice, it is typical to calculate an average of profile measurements over each scan.

Conventional scanning systems using one or more scanners deliver to the customer one or more cross-directional profiles that are updated periodically at the end of each scan. In multiple scanner systems these scanner profiles are taken at different MD positions. No attempt is made to correlate when a piece of sheet at an upstream scanner is actually (re)measured a little bit later with a down-stream scanner.

In fabricating anode or cathode electrodes, a metal foil from metal rolls is coated with a mixture including an active material to create the battery electrodes. These active materials may cover the entire foil surface except for the edges or may be applied in stripes along the direction of production in the MD direction, or in discrete patches spanning the width of electrodes (in the cross direction). The patches may also be applied in a pattern of rectangles where there are gaps in the coating in both the machine direction and the cross direction. As these coated electrodes go through various production steps, physical properties such as areal weight and thickness are measured by scanning sensors. To achieve and maintain the quality of continuous, rectangular pattern patch electrodes, constant, online measurements of quality factors are made.

Depending on the coating pattern, when the scan begins, and the scan across the sheet, the profiles will include measurements from a combination of coating sections, gaps aligned with machine direction and gaps aligned with cross direction.

For the display, analysis, and control of such patch patterns it is often useful to further process the scanned measurements to focus only on the coated part of the electrode patch. When using currently known manufacturing techniques and employing only scanned data the edges of the patches become difficult to accurately identify due to measurement noise, sensor convolution of coated and uncoated electrode at the edges of the patches and changes in edge positions from scan to scan. Furthermore, except in a few specific cases, the gaps between patches will show up in different places within each profile and will often join with the gaps between.

Therefore, it would be desirable in manufacture of battery electrodes to provide for an apparatus and method for an improved scanning method that can readily permit identification of the edges of patches to allow scanned measurements to focus only on the coated part of the electrode patch during the manufacture of battery electrodes.

### SUMMARY

In a first embodiment, a sheet system and method for measuring the properties of a material deposited on a sheet in a plurality of patterns is disclosed. The sheet containing the plurality of patterns is arranged to travel in a machine direction (MD) which is scanned by a scanning sensor that measures a physical property of each of the plurality of patterns. The sheet system and method generates an MD position profile of the plurality of patterns that comprises, measuring the MD speed of the moving sheet to generate time-stamped measured MD speed signals and record the time-stamped measured MD speed signals and the physical property measurements from the scanning sensor. The method further includes recording visual images of the plurality of patterns from the moving sheet and correlating the recorded time-stamped measured MD speed signals with the time-stamped physical property measurements and the visual images of the plurality of patterns, to generate an MD position profile which aligns the physical property measurements of the scanning sensor in the CD position as a function of the speed of the sheet and the locations of the plurality of patterns on the sheet.

In a second embodiment a sheet system and method for measuring the properties of a material deposited on a sheet in a plurality of patterns is disclosed. The sheet containing the plurality of patterns travels in a first speed in a machine direction (MD) that includes a scanning sensor that measures a physical property traversing across the sheet in a scanning path at a first speed in a cross-direction (CD) to the MD. The sheet system and method measuring the physical property of the plurality of patterns comprises, recording visual images of the plurality of patterns from the sheet in the MD and converting the recorded visual images of the plurality of patterns into measurement data representing positional parameters of the plurality of patterns on the sheet. The method further includes adjusting each of the first speed of the sheet and the first speed of the scanning sensor to a second speed that changes the scanning path of the scanning sensor in the CD to measure the physical property of each pattern of the plurality of patterns on the sheet.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 illustrates an exemplary roll-to-roll sheet production system for coating a metal substrate with anodic or cathodic materials;
FIG. 2 illustrates a system for machine direction position profile measurement of a web sheet of electrodes patches;
FIG. 3 illustrates the use of camera captured images with machine direction position profiles for tracking electrode patches on a moving web sheet;
FIG. 4 schematically illustrates a camera image that identifies the edges of a group of electrode patches;
FIG. 5A illustrates the scanned measurement path combining the camera captured images and machine direction profile measurement system; and
FIG. 5B illustrates a graphical example of a machine direction measured profile in accordance with the invention.

### DETAILED DESCRIPTION

The figures discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

In the manufacture of batteries such as Lithium-ion batteries, thin metal foils are coated with an active material to create the battery electrodes. These active materials may cover the entire foil surface except for the edges or may be applied in stripes along the direction of production (the machine direction), in discrete patches spanning the width of electrodes (in the cross direction), or in a pattern of rectangles where there are gaps in the coating in both the machine direction and the cross direction. As these coated electrodes go through various production steps, physical properties such as areal weight and thickness are measured by scanning sensors. A scanner consists of a beam spanning the width of the process with heads mounted above and below the sheet containing the sensor components needed to measure one or more properties of the sheet. The heads move synchronously back and forth across the sheet in a direction, perpendicular to the direction of production. Since the sheet is moving in the machine direction and the scanner takes measurements in the cross direction, the true path of each scan traces a diagonal across the sheet. For battery electrodes, depending on the coating pattern, when the scan begins, and the scan sheet across the sheet, the profiles will include measurements from a combination of coating sections, gaps aligned with machine direction and gaps aligned with the cross direction.

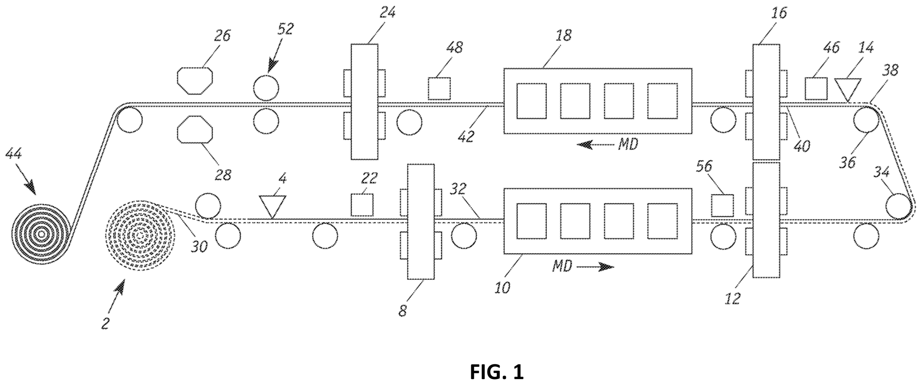

FIG. 1 illustrates a process for coating a metal web or sheet that is used in fabricating electrodes for lithium-ion electrochemical cells and batteries. For making anodes, the electrode coating includes anodic active materials such as graphite and, for making cathodes, the electrode coating includes cathodic active materials such as a lithium metal oxide. Electrodes include a current collector metal foil that is coated on one or both sides of the foil with electrode slurry which can also include carbon black, binder, and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material. The foil is typically 9 to 20 µm thick and the electrode coating ranges from 75 to 400 µm in thickness on one or both sides of the foil so that a double-side coated electrode can have a caliper of up to 850 µm with mostly being typically about 250 µm thick.

As shown in FIG. 1, roll 2 is unwound by an unwinder and supplies a continuous sheet of metal web or sheet 30 that is coated on the top (or first) surface with a layer of electrode slurry by coater 4 as a continuous layer or preferably in discrete patches spanning the width of electrodes (in the cross direction), or in a pattern of rectangles where there are gaps in the coating in both the machine direction and the cross direction. The basis weight, thickness, and other characteristics of the sheet of metal web 30 from roll 2 are usually known. Tachometer 22 measures the line speed and scanning gauge 8 measures the basis weight, thickness, or other properties of the electrode slurry. The input from the tachometer can be used to compute the machine direction (MD) position of the sheet under measurement. Maps displaying the scanner measurements are typically divided into points or bins across the width; for example, each bin can represent a distance of about 5 mm. As the scanning gauge 8 scans cross the sheet, the MD position of each cross direction (CD) bin will be recorded to create the MD position profile for the primary sensor. CD/MD offset corrections can be applied for additional sensors in the scanning head. An end-of-roll signal or another dedicated signal can be used to set the reference (zero') position for the MD position measurement.

Coater 4 includes actuators that control a doctor blade to regulate the amount of slurry that is extruded onto sheet 30. Dryer 10 removes excess solvents and cures the slurry that is on the moving coated sheet 32 to form electrode layer patches on the sheet. Tachometer 56 measures the line speed and gauge 12 measures one or more properties of the moving coated sheet exiting dryer 10. Thereafter rolling supports 34 and 36 reverse the orientation of the moving sheet so that the second surface is now the uncoated top side whereupon coater 14 applies a layer of electrode slurry on the top or second surface of the moving sheet 38 in the manner described earlier for coater 4. Tachometer 46 measures the line speed and properties of the double-side coated sheet 40 are measured with gauge 16 before entering dryer 18.

Tachometer 48 measures the line speed and scanner device 24 measures properties of the electrode layers on the first and second surfaces. After calendar 52 a rewinder takes up the double-side coated sheet 42 into roll 44. Surface defects on the coatings are monitored by camera-based web inspection systems 26, 28. Although the process is illustrated as being continuous, it is understood that the various steps and attendant measurements can be performed separately in discrete, discontinuous batch operations. For example, the roll 44 is subsequently subject to a slitting operation to form individual electrodes suitable for assembling into cells and batteries.

Sensors 8, 12, 16 and 24 are depicted as operating in the transmissive mode. For instance, each comprise a radiation source that directs a beam of radiation into a moving sheet and a radiation receiver that detects radiation that is transmitted through the material. Sensors operating in the transmission mode are described, for instance, in U.S. Pat. Nos. 9,182,360, 8,527,212, 7,298,492 and US 2021103821173 and US 2021/0262776, which are incorporated herein by reference. Alternatively, the sensors can operate in the reflective mode. For instance, each sensor has an upper head housing both a radiation source and detector. Sensors operating in the reflective mode are described, for instance, in U.S. Pat. Nos. 9,182,360, 8,527,212, 7,298,492 and US2020/0096308, which are incorporated herein by reference. The sensors can also comprise a combination of reflective and transmissive sensors.

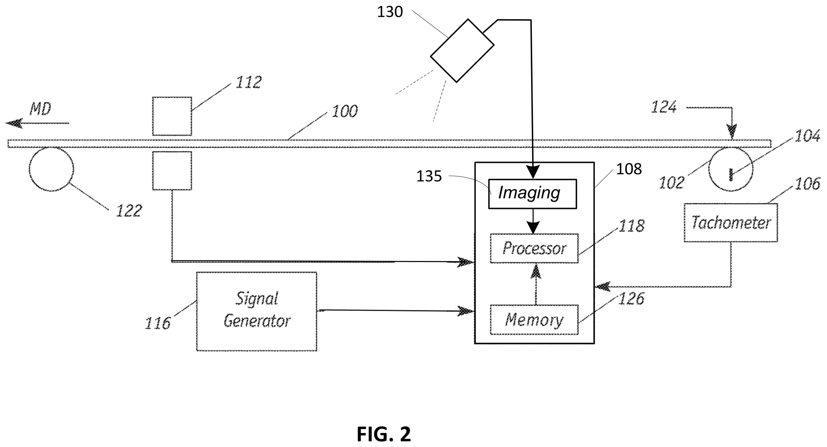

FIG. 2 illustrates a system for MD position profile measurement of a web sheet 100 of electrodes patches that moves in the MD and is supported by rollers 102 and 122. Roller 102, which supports sheet 100 at position 124, includes a magnet 104 that is monitored by a line tachometer 106. Located downstream are a scanning sensor 112 whose distance from position 124 is known. The MD speed can be measured at any position of the moving web sheet 100. It is preferable to measure the MD speed near scanning sensor 112 since the sheet can stretch. Alternatively, an optical tachometer can be employed. Line tachometer pulses are counted at a designated rate, such as 2 KHZ, and accurately time stamped. The system includes a controller 108 which has a processor 118 and memory 126 and a signal generator 116. In operation, line tachometer 106 measures the rotation speed of roller 102 and sends pulse signals to controller 108 which converts the rotation speed to MD speed by relating; to the radius of roller 102. Scanner 112 measures characteristics of sheet and transmits corresponding signals to the controllers. The signal generator 116 sends synchronizing signals to scanner 112 which establishes the origin for the MD position axis. In this system, the synchronization signals need only be provided to one of the scanners on the line. Integration of the velocity over time yields the change in position along the MD.

The scanner 112 performs binning of MD positions such that instances when the scanning gauge enters and exits in each of the user-defined, cross direction measurements regions (bins) are accurately timestamped. The tachometer counts values that fall within these timestamps which are accumulated and averaged to generate a MD position of each such cross directional bin. Thereafter, the MD position of each bin of the sensor measurement profile is aggregated as an array and displayed as an MD position profile for each cross directional profile. Each sensor signal measuring a sheet property is also aggregated as an array and displayed as a cross-direction profile. Due to measurement noise, sensor convolution of coated and uncoated electrodes at the edges of the patches, edge positions change from scan to scan. Furthermore, except in a few specific cases, the gaps between patches will show up in different places within each profile and will sometimes join with the gaps between lanes, further complicating efforts to rationalize the scanned data.

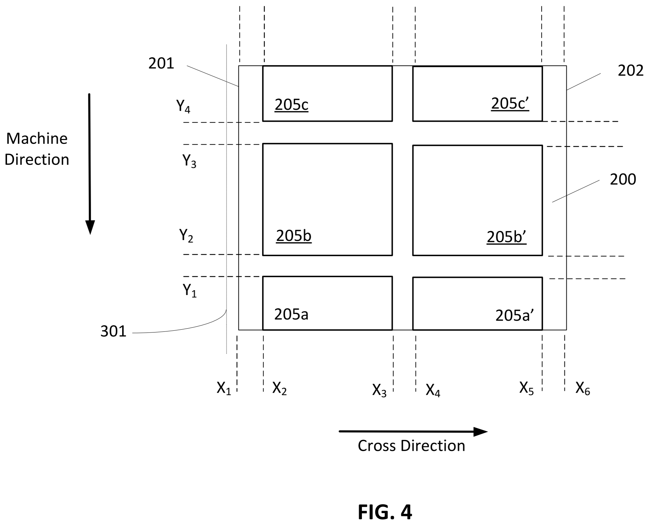

In order to more accurately identify the edges of the sheet 100 and the edges of the electrode patches, a camera 130 is located just prior to the scanning sensor 112 to obtain images of the electrode patches on web sheet 100. The images captured by camera 130 are transmitted to an imaging system 135 contained in controller 108. Processor 118 executing any currently known image analysis technique process the collected images from imaging system 135. As shown in FIG. 4 the edges of the sheet and all the edges of the electrode patches deposited on the sheet are captured by the camera 130 before the scanner 112. Furthermore, by referencing the camera field of view to a common cross-direction reference, and to the line tachometer 106 an MD position reference can be created by controller 108, thereby aligning the visual images from the camera 130 to scanner 112. The edges of the electrode patches are detected by camera 130 which are then mapped to the scanned profiles avoiding the need for any complicated signal analysis techniques to process the scanned profile for further use.

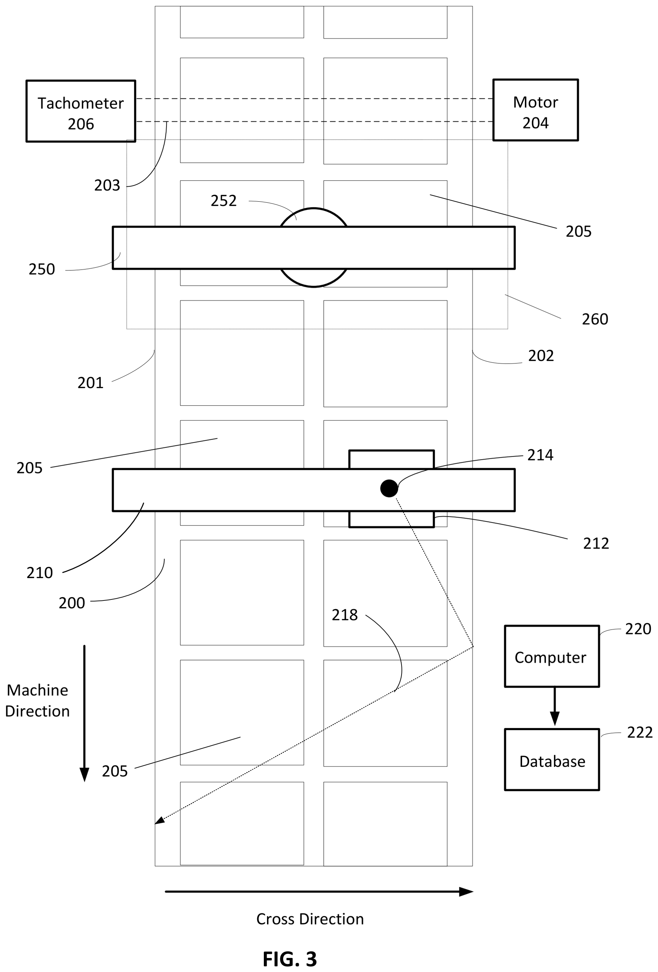

FIG. 3 illustrates the use of the camera captured images with MD position profiles in tracking electrode patches on a moving sheet in order to improve edge detection of the electrode patches. Electrode patches 205 are coated on a moving substrate 200 (foil) that is supported and transported in the MD by roller 203 which is operated by motor 204. Tachometer 206 monitors the speed of roller 202. A first frame 210 supports scanning device 212 that includes a gauge which measures the basis weight and/or thickness of the coated sheet. The scanning device 212 is driven by an electric motor (not shown) and periodically traverses coated sheet 200 generally at a constant speed. The gauge is shown measuring spot or area 214 of the coated sheet 200. The gauge does not measure the selected sheet property at locations which are aligned exactly perpendicular to the longitudinal edges of the sheet. Instead, because of the sheet velocity, the scanning device travels diagonally across the coated sheet surface, with the result that consecutive scanning paths have a zig-zag pattern with respect to the direction perpendicular to the longitudinal to the edges 201, 202 of coated sheet 200. An example of such a zig-zag pattern is scanning path 218 which would be traced by the gauge as the scanning device 212 traverses the surface of sheet during back-and-forth consecutive scans. The angles of the scanning path relative to the true CD depend upon the cross-directional velocity of the scanning device and upon the machine-directional velocity of the coated sheet 200 which is known. The zig-zag pattern of interrogations spots covers a relatively small portion of the coated sheet 200 surface.

In a first embodiment a computer 220 coordinates the measurements by scanning device 212 so that the locations of interrogation spots in pattern 218 are recorded in database 222 along with the corresponding MD positions.

A second frame 250 supports a fixed camera 252 that is visually directed to scan the entire web sheet 200 along an angle of view shown generally by box 260. The angle of view extends in the CD from edge 201 to edge 202. The angle of view capture images of edges 201, 202 of sheet 200 and the edges of electrode patches 205 in both the MD and the CD as they pass under the camera 252. The camera 252 is located between the support roller 202 and tachometer 206 and the frame 210 and scanning device 212.

FIG. 4 schematically illustrates a camera image that identifies the edges of a group of coating patches 205 located within the camera 252 angle of view. For example, as sheet 100 traverses under the camera 252 in the MD the camera captures visual images of the electrode patches and records data defining the edges 201, 202 of sheet 200 and the locations of the edges of the electrode patches 205 in both the CD and the MD. For example, a group of coated electrode patches 205 are organized on sheet 200 in columns and rows. A first row consists of electrode patches 205a and 205a', a second row consisting of electrode patches 205b and 205b' and a third row consisting of electrode patches 205c and 205c'. The rows of electrode patches are further organized as columns consisting of a first column proximate edge 201 consisting of electrode patches 205a-c and a second column consisting of patches 205a'-205c' that are proximate edge 202. The edges of the electrode patches have uncoated sheet areas between them and edges 201 and 202.

As the electrode patches 205a-c and 205a'-c' pass under the camera 252, the camera captures an image of the sheet 200 and in its field of view 260 and transmits the captured image to imaging system 135. The imaging system identifies first edge 201 of sheet 200 and marks it as X₁. The first coated edge of electrode patch 205a-c in the CD is marked as X₂. This identifies the uncoated space between the first edge 201 and the first electrode patches 205a-c as X₁, X₂.

The next uncoated space in the CD between electrode patches 205a-c and 205a'-c' is labeled as X₃, X₄, and the uncoated space in the CD between electrode patch 205a'-c' and the edge 202 of the sheet 200 as X₅, X₆. The uncoated spaces defined by the edges of the electrode patches in the MD between the rows is marked as Y₁, Y₂ for the electrode patches between the rows containing patches 205a-a' and 205b-b'. The uncoated space between electrode patches 205b-b' and 205c-c' in the MD are marked by imaging system 135 as Y₃, Y₄. A common zero position 301 in the MD next to edge 201 of sheet 200 may be provided to set a calibration reference point for the imaging system to provide a known starting point for markings.

As the measurements by scanning device 212 are made, the locations of the interrogation spots in the scanning path 218 shown in FIG. 3 are recorded in a database 222 along with the corresponding visual images made by camera 252. The database thus has a library of the edges of the electrode patches 205a-c and 205a'-c' provided by camera 252, the measurements made by the scanning device 212 and the speed of the web sheet from tachometer 206. Computer 220 corelates and aligns the measurements stored in database 222 so that the edges and locations of the electrode patches are recorded and mapped to the scanned profiles.

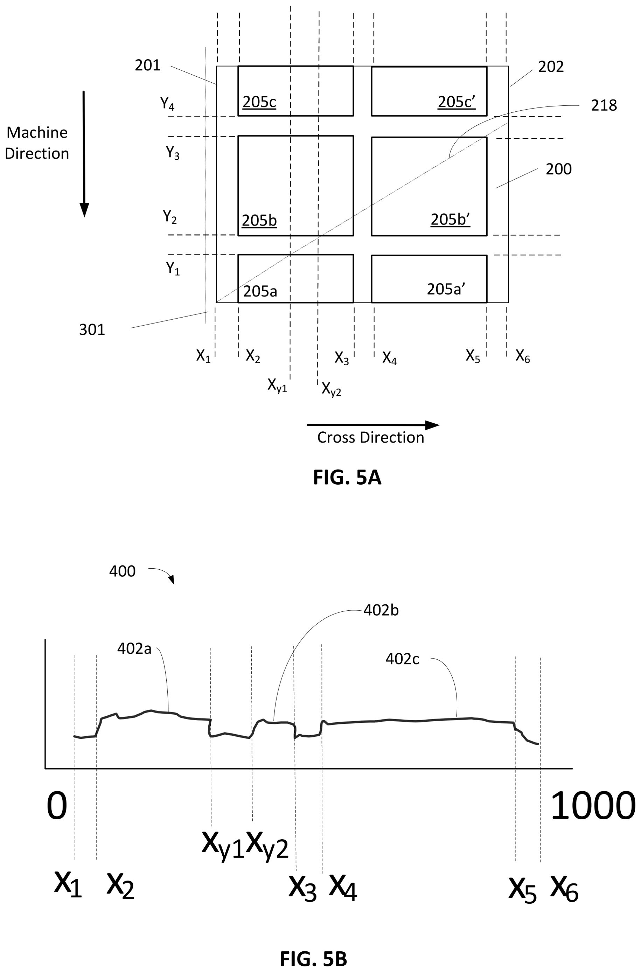

FIG. 5A illustrates the scanned measurement path made by scanning device 212 along scanning path 218. The zig-zag pattern of scanning path 218 crosses the uncoated area between electrode patch 205a and 205b diagonally that is recorded as Xy1 and Xy2 in the scanning profile, thereby identifying the location of the uncoated gap between patches 205a and 205b.

FIG. 5B illustrates an example of a measured profile 400 measured along scanned path 218 measurement path in the MD and CD. The profile is produced by computer 220 using visual imaging data from camera 252, CD measurement data from scanner device 212 and MD data from tachometer 206. The CD uncoated area between edge 201 of sheet 200 and electrode patch 205a is shown as X₁, X₂. The graph illustrates a reduced gauge reading due to the area being uncoated. The next reduced gauge reading is shown at Xy₁, Xy₂ that corresponds to the uncoated area in the machine direction Y₁, Y₂ between electrode patches 205a and 205b. The reduced gauge reading X₃ and X₄ delineates the uncoated area between electrode patch 205b and 205b' and X₅ and X₆ the uncoated area between electrode patch 205b' and edge 202 of sheet 200. The increased gauge thicknesses 402a-c identifying the coated electrode patch 205a, 205b and 205b' traversed by scanner device 212 along scanning path 218, shown in FIG. 5A.

In a second embodiment, positional parameters of electrode patches 205 detected by the images taken by camera 252, may be converted to measurement data by imaging system 135 and sent to controller 108. Processor 118 executing any currently known image conversion technique process the collected images from imaging system 135 to extract measurement data for the electrode patches 205. For example, for any electrode patch 205 shown at FIG, 4, the length and width of the electrode patch 205 and the interval of uncoated sheet 200 between the coated patches 205 and between the coated patches and the edges 201, 202 may be converted by the image conversion technique by imaging system 135 into measurement data representing the positional parameters of each electrode patch 205 or a selected group of electrode patches on coated sheet 200. The controller 108 receives the measurement data from imaging system 135 and uses the measurement data to modify the scanning path 218 of scanning device 212 across sheet 200. The scanning path 218 is adjusted by the controller 108 to adjust the scanning path across sheet 200 to consider the dimensions of the electrode patches 205, the distance past the edges of any electrode patch 205 to scan, or if one or more electrode patches are to be scanned during a scanning path 218.

The controller 108 using the positional parameters provided by the measurement data of the electrode patches 205 would adjust the MD speed of sheet 200 and the CD speed of scanning device 112. The controller 208 may send control signals to control the speed of the motor 122 which drives the sheet in the MD and the speed of the scanning device 212 traversing the sheet 200 to generate an optimal zig-zag scanning path 218, such as the scanning path 218 shown in FIG. 5A. By adjusting the MD speed of the coated sheet 200 and the CD speed of the scanner 112 a desired angle of measurement across the sheet 200 is achieved that generates a scanning path 218 to optimally read portions or all the electrode patches 205 traversing under scanning device 212.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A sheet monitoring system that comprises:
a sheet that moves in a machine direction (MD) having a material deposited on the sheet in a plurality of patterns;
means for measuring the speed of the sheet;
means for associating the measured speed of the sheet with time to generate and store time-associated sheet speeds;
means for capturing and storing images of the plurality of patterns deposited on the sheet;
a scanning sensor for measuring and storing a characteristic of the material deposited on the sheet wherein the scanning sensor traverses along a cross direction (CD) of the sheet which is perpendicular to the MD; and
means for associating the stored images of the patterns with the stored time-associated sheet speeds and corelate the stored characteristic measurements for the plurality of patterns.

2. The system of claim 1 wherein the means for measuring the speed of the sheet is a line tachometer located near the scanning sensor that operates to generate signals representative of the speed at the line tachometer.

3. The system of claim 1, wherein the means of generating time-associated speeds comprises a first processor that generates a time stamp for each time-associated sheet speed, wherein the time stamps are stored in a memory.

4. The system of claim 3, wherein the means of capturing images is a camera device having a field of view of the sheet before the scanning sensor as the sheet moves in the MD.

5. The system of claim 4, wherein the first processor includes an imaging system and the images from the camera are sent to the first processor, wherein the imaging system processes the images captured by the camera to identify and store the identified plurality of patterns in the memory.

6. The system of claim 5, wherein the means for associating the stored images of the plurality patterns with the time-associated sheet speeds comprises the first processor generating an MD position reference with the stored time stamp and images of the plurality of patterns that aligns the captured plurality of images with the stored characteristic measurements made by the scanning sensor.

7. The system of claim 6, wherein the first processor uses the MD position reference to generate a scanned profile of the plurality of patterns on the sheet.

8. The system of claim 2, wherein the sheet is supported by a first roller and the line tachometer measures the rotational speed of the first roller.

9. The system of claim 1, wherein the sheet comprises a metal substrate and the material deposited on the sheet is an electrode layer.

10. In a sheet system for measuring properties of a material deposited on a sheet in a plurality of patterns and which travels in a machine direction (MD) that includes a scanning sensor that measures a physical property of each of the plurality of patterns, a method of generating an MD position profile of the plurality of patterns that comprises:
measuring the MD speed of the moving sheet and generating time-stamped measured MD speed signals;
recording the time-stamped measured MD speed signals and the physical property measurements from the scanning sensor;
recording visual images of the plurality of patterns from the moving sheet;
correlating the recorded time-stamped measured MD speed signals with the time-stamped physical property measurements and the visual images of the plurality of patterns; and
generating an MD positron profile which aligns the physical property measurements of the scanning sensor in the CD position as a function of the speed of the sheet and the locations of the plurality of patterns on the sheet.

11. The method of claim 10, wherein the visual images of the plurality of patterns are made by an imaging device that captures visual images of the plurality of patterns as the sheet traverses under the imaging device field of view.

12. The method of claim 10, wherein the first scanning sensor measures a first physical property along a scanning path that is a zig-zag pattern in a cross-direction (CD) with respect to the sheet MD.

13. The system of claim 10, wherein the sheet comprises a metal substrate and the material deposited on the sheet is an electrode layer.

14. In a sheet system for measuring properties of a plurality of a material deposited on the sheet in a plurality of patterns and which travels in a first speed in a machine direction (MD) that includes a scanning sensor that measures a physical property traversing across the sheet in a scanning path at a first speed in a cross-direction (CD) to the MD, a method for measuring the physical property of the plurality of patterns that comprises:
recording visual images of the plurality of patterns from the sheet in the MD;
converting the recorded visual images of the plurality of patterns into measurement data that represent positional parameters of the plurality of patterns on the sheet; and
adjusting each of the first speed of the sheet and the first speed of the scanning sensor to a second speed that changes the scanning path of the scanning sensor in the CD to measure the physical property of each pattern of the plurality of patterns on the sheet.

15. The method of claim 14 wherein the visual images of the plurality of patterns is made by an imaging device that captures visual images of the plurality of patterns as the sheet traverses under the imaging device field of view, and the system includes a memory, wherein recording the visual images comprises storing the visual images in the memory and a controller having a processor executing an image conversion technique retrieves the visual images from the memory and extracts the measurement data representing the positional parameters of the plurality of patterns deposited on the sheet, and responsive to the measurement data the controller sends control signals to adjust the speed of the sheet to the second speed and the speed of the scanning sensor to the second speed.
